# EUROPEAN PATENT APPLICATION

(11) **EP 4 356 809 A1**
(43) Date of publication of application: **24.04.2024**
(21) Application number: 21945750.4
(22) Date of filing: 28.10.2021
(51) Int. Cl.: A47L 11/40, A47L 11/29

(54) **RECYCLING BUCKET AND CLEANING DEVICE**

(30) Priority: 15.06.2021 CN 202110662275
(71) Applicant: Beijing Roborock Technology Co., Ltd., Beijing 102206 (CN)
(72) Inventor: LIU, Wang, Beijing 102206 (CN); LUO, Guangzhong, Beijing 102206 (CN); LUO, Ping, Beijing 102206 (CN); LI, Jiapeng, Beijing 102206 (CN)
(74) Representative: Winter, Brandl - Partnerschaft mbB
(86) International application number: PCT/CN2021/127137
(87) International publication number: WO 2022/262171

(57) **Abstract**

A recycling bucket (140) and a cleaning device. The recycling bucket (140) comprises: an upper cover (110); a filtering part (120), which is detachably connected to the upper cover (110) and which is provided with a plurality of filtering holes (121), a filtering space being formed between the filtering part (120) and the upper cover (110); a sewage intake passage (131), which passes through the filtering part (120), and which comprises a channel outlet (132) that is located in the filtering space, the channel outlet (132) being located above the filtering part (120). By means of the structure of the recycling bucket (140), a medium to be treated on a surface to be cleaned is filtered from the channel outlet (132) of the sewage intake passage (131) through the filtering holes (121) of the filtering part (120), a solid medium is located on the side of the filtering part (120) facing the upper cover (110), and a liquid medium is located on the side of the filtering part (120) distant from the upper cover (110), which then further implements the solid-liquid separation of a medium to be cleaned, thereby reducing the possibility of solid debris in a poured out solid-liquid mixture blocking a liquid discharge pipeline, and helping to improve the cleanliness of the recycling bucket (140) itself.

## Description

### CROSS-REFERENCE TO RELATED APPLICATION

This application claims priority of the Chinese Patent Application No. 202110662275.1, filed on June 15, 2021, which is incorporated herein by reference in its entirety.

### TECHNICAL FIELD

The present disclosure relates to the field of cleaning technologies, and in particular, to a recycling bin and a cleaning device.

### BACKGROUND

The sewage suctioned by current cleaning device, such as a hand-held floor scrubber, during operation may contain solid debris. When the sewage is poured, the solid debris in the solid-liquid mixed sewage may be adhered to the inner wall of the recycling bin, such that the solid debris cannot be poured completely, and there is a potential risk that the poured solid debris blocks a drainage pipeline.

### SUMMARY

A series of concepts with simplified form have been introduced in the Summary section, and they will be described in further detail in the Detailed Description section. Neither is the Summary section of the present disclosure intended to attempt to limit key features and essential technical features of claimed technical solutions, nor is it intended to attempt to determine the protection scope of the claimed technical solutions.

According to an embodiment of the present disclosure, a recycling bin is provided, including: an upper cover; a filtering portion, detachably connected to the upper cover and provided with a plurality of filtering holes, where a filtering space is formed between the filtering portion and the upper cover; and a sewage channel, passing through the filtering portion and including a channel outlet disposed within the filtering space, where the channel outlet is located above the filtering portion.

In some embodiments, the recycling bin further includes: a bin body, including an outer shell and an inner shell enclosed to form an accommodation cavity, where the outer shell is detachably connected to the upper cover, the inner shell is provided with the sewage channel, and the filtering portion is within the accommodation cavity; where the channel outlet is communicated with the accommodation cavity, and the sewage channel further includes a channel inlet outside the accommodation cavity.

In some embodiments, the upper cover includes: a cover body detachably connected to the outer shell, where the cover body is provided with a suction port, the suction port is communicated with the accommodation cavity, the suction port enables substance to be cleaned to be suctioned under the action of the fluid through the channel inlet to the channel outlet and then to flow through the filtering portion.

In some embodiments, the upper cover further includes: a support disposed on a side of the cover body toward the channel outlet and located on a side of the channel outlet close to the outer shell, where the support is detachably connected to the filtering portion.

In some embodiments, one of the upper cover and the filtering portion is provided with a limiting portion, and the other one of the upper cover and the filtering portion is provided with a positioning portion configured to fit the limiting portion; and contact or separation between the limiting portion and the positioning portion is configured to connect the filtering portion and the upper cover or to separate the filtering portion from the upper cover.

In some embodiments, the limiting portion includes a magnetic member, and the positioning portion includes a magnetically-attracted member; and/or the limiting portion includes a clamp, and the positioning portion includes a slot.

In some embodiments, the filtering portion includes: a bottom plate provided with a mounting hole, where the sewage channel passes through the mounting hole, and a side plate connected to the bottom plate, where the channel outlet is located above the side plate, and the filtering holes are at least provided on the bottom plate.

In some embodiments, the side plate protrudes in a direction away from the bottom plate to provide a connecting portion, and the connecting portion includes a clamp; and the upper cover protrudes in a direction toward the bottom plate to provide a mounting portion configured to mount the connecting portion.

In some embodiments, the mounting portion includes a mounting groove, and the upper cover is provided with a slot passing through a bottom of the mounting groove; the mounting portion further includes a bottom wall close to the bottom plate; and the connecting portion further includes an abutting portion located on a side of the clamp close to the bottom plate, where the abutting portion is configured to contact the bottom wall so as to position the clamp in the slot.

According to an embodiment in the second aspect of the present disclosure, a cleaning device is provided, including: a device body, and any one of the recycling bins according to the first aspect, where the recycling bin is detachably connected to the device body.

According to the recycling bin and the cleaning device provided by the embodiments of the present disclosure, the recycling bin includes the upper cover, the filtering portion and the sewage channel. The filtering portion is provided with a plurality of filtering holes for solid-liquid separation of a substance to be treated. The upper cover is detachably connected to the filtering portion. The sewage channel passes through the filtering portion and includes the channel outlet located between the upper cover and the filtering portion. Thus, after the substance to be treated on a surface to be cleaned passes through the channel outlet of the sewage channel and is filtered by the filtering holes of the filtering portion, the solid substance is located on the side of the filtering portion toward the upper cover, and a liquid substance is located on the side of the filtering portion away from the upper cover, thereby achieving the solid-liquid separation of the substance to be cleaned, reducing the possibility that solid debris in the solid-liquid mixture is adhered to the inner shell of the recycling bin and cannot be dumped cleanly when a solid-liquid mixture is accommodated in the recycling bin without solid-liquid separation, and meanwhile, reducing the possibility that the solid debris blocks a drainage pipeline when the solid-liquid mixture is poured, facilitating to improve the cleanliness of the recycling bin, and guaranteeing subsequent treatment of the liquid substance and the solid substance.

### BRIEF DESCRIPTION OF THE DRAWINGS

The following drawings of the present disclosure are given here as part of the embodiments of the present disclosure for understanding the present disclosure. The accompanying drawings illustrate the embodiments of the present disclosure and description thereof to explain the principles of the present disclosure.

In the figures:
FIG. 1 illustrates a schematic structural diagram of a recycling bin according to some embodiments of the present disclosure;
FIG. 2 illustrates a schematic structural diagram of an upper cover and a filtering portion according to some embodiments of the present disclosure;
FIG. 3 illustrates a perspective sectional view of the embodiment illustrated in FIG. 2;
FIG. 4 illustrates a partially enlarged schematic diagram of portion A in the embodiment as illustrated in FIG. 3; and

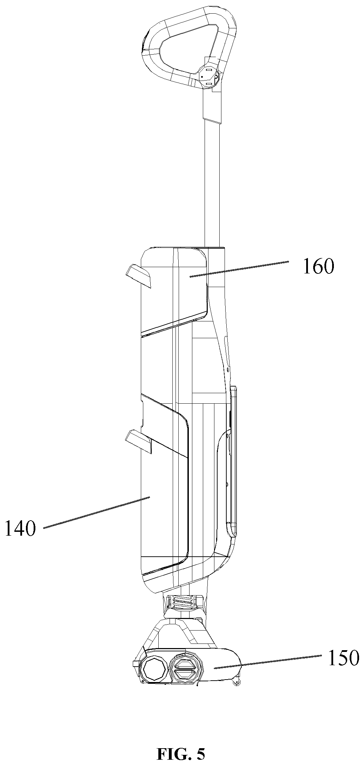

FIG. 5 illustrates a schematic structural diagram of a cleaning device according to some embodiments of the present disclosure.

### Reference signs:

| | | | |
|---|---|---|---|
| 110: | upper cover; | 111: | cover body; |
| 112: | suction port; | 113: | support; |
| 114: | filtering screen; | 115: | mounting portion; |
| 116: | slot; | 117: | bottom wall; |
| 120: | filtering portion; | 121: | filtering hole; |
| 122: | bottom plate; | 123: | side plate; |
| 124: | connecting portion; | 125: | clamp; |
| 126: | abutting portion; | 127: | mounting hole; |
| 130: | bin body; | 131: | sewage channel; |
| 132: | channel outlet; | 133: | channel inlet; |
| 134: | inner shell; | 135: | outer shell; |
| 140: | recycling bin; | 150: | surface traveling portion; and |
| 160: | upright portion. | | |

### DETAILED DESCRIPTION

In the following description, numerous specific details are set forth in order to provide a more thorough understanding of the technical solutions provided by the present disclosure. However, it will be obvious to those skilled in the art that the technical solutions provided by the present disclosure may be practiced without one or more of these details.

It should be noted that the terms used herein are for the purpose of describing embodiments only, and are not intended to limit the exemplary embodiments according to the present disclosure. As used herein, the singular forms are also intended to include the plural forms unless the context clearly dictates otherwise. Furthermore, it should further be understood that the terms "containing" and/or "comprising/including" used in this specification mean there exists a stated feature, integer, step, operation, element and/or component, but do not exclude presence or addition of one or more other features, integers, steps, operations, elements, components and/or combinations thereof.

Now, exemplary embodiments according to the present disclosure will be described in more detail with reference to the accompanying drawings. These exemplary embodiments may, however, be embodied in many different forms and should not be construed as limitations to the embodiments set forth herein. It should be understood that these embodiments are set forth to make this disclosure thorough and complete, and fully convey their concepts to those skilled in the art.

Some embodiments in the first aspect of the present disclosure provide a recycling bin 140, and some embodiments in the second aspect of the present disclosure provide a cleaning device. Specifically, the cleaning device includes a hand-held cleaning device or a self-moving cleaning device. The cleaning device includes a main body. The recycling bin 140 is detachably connected to the main body. When the cleaning device works, the recycling bin 140 is mounted onto the main body and configured to collect a substance to be treated on a surface to be cleaned, e.g., collecting sewage and solid debris; and after the cleaning device completes cleaning, the recycling bin 140 can be disassembled from the main body, and the substance to be treated is poured. For example, the hand-held cleaning device may be a hand-held floor scrubber, a hand-held ground polishing robot, a hand-held weeding robot, or any other cleaning devicees that meet requirements. The self-moving cleaning device may be a machine with sweeping and mopping functions or other cleaning devicees that meet requirements. For ease of description, the embodiment describes the technical solution of the present disclosure by taking the hand-held floor scrubber as an example.

Further, by taking an example in which the cleaning device is the hand-held floor scrubber, as illustrated in FIG. 6, the cleaning device includes: a surface traveling portion 150, an upright portion 160, and a recycling bin 140. The surface traveling portion 150 is in contact with a surface to be cleaned in order to clean residual substance to be treated on the surface to be cleaned. The upright portion 160 is connected to the surface traveling portion 150. The recycling bin 140 is detachably mounted on the upright portion 160. When the surface traveling portion 150 operates, the upright portion 160 is configured to make the surface traveling portion 150 move so as to clean the surface to be cleaned and to collect the substance to be treated into the recycling bin 140. After cleaning is completed, the recycling bin 140 may be detached from the upright portion 160, and the collected substance to be treated is poured. For example, objects cleaned by the cleaning device include ceramic tiles, floor, cement floor, glass surfaces and other surface objects with flat surfaces that can be cleaned with water.

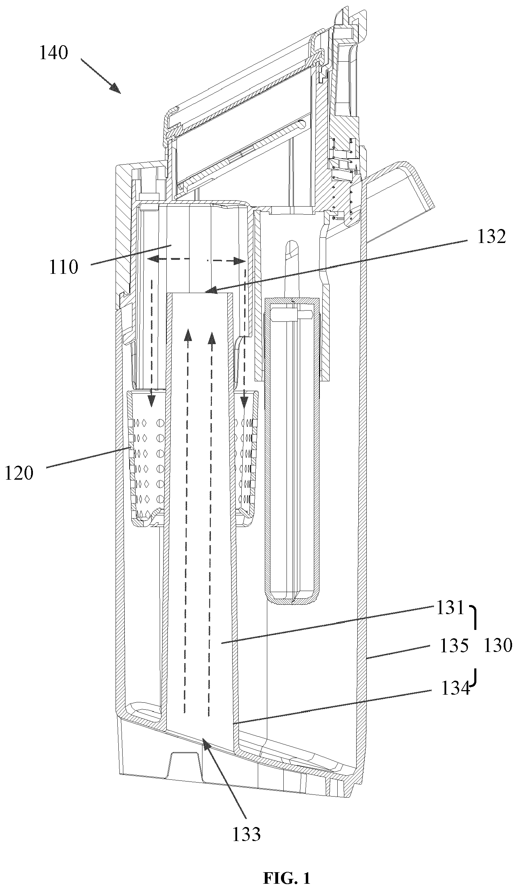

In some embodiments according to the present disclosure, as illustrated in FIG. 1, the recycling bin 140 includes an upper cover 110, a filtering portion 120, and a sewage channel 131. The sewage channel 131 is in communication with the surface to be cleaned, so that the substance to be treated on the surface to be cleaned is received into the recycling bin 140 through the sewage channel 131. The substance to be treated includes liquid and solids. For example, the liquid is sewage, and the solids are hair, flakes, sticks, large-particle dust, or the like.

The filtering portion 120 is provided with a plurality of filtering holes 121 for solid-liquid separation of the substance to be treated. The filtering portion 120 is detachably connected to the upper cover 110. A filtering space is formed between the filtering portion 120 and the upper cover 110. The sewage channel 131 passes through the filtering portion 120 and includes a channel outlet 132 located in the filtering space, so that the solid substance is located on the side of the filtering portion 120 facing the upper cover 110 and the liquid substance is located on one side of the filtering portion 120 away from the upper cover 110 after the substance to be treated on the surface to be cleaned go out of the channel outlet 132 of the sewage channel 131 and is filtered by the filtering holes 121 of the filtering portion 120, thereby achieving the solid-liquid separation on the substance to be cleaned. By doing this, it can reduce a possibility that solid debris in the solid-liquid mixture is adhered to the inner wall of the recycling bin and cannot be poured cleanly when a solid-liquid mixture is received into the recycling bin 140 without solid-liquid separation. Meanwhile, it can reduce a possibility that the solid debris in the poured solid-liquid mixture blocks a drainage pipeline, thereby facilitating improving cleanliness of the recycling bin 140, providing guarantee for subsequent treatment on the liquid substance and the solid substance, and further improving the cleaning efficiency.

In some embodiments, by disposing the channel outlet 132 of the sewage channel 131 above the filtering portion 120, a volume of the filtering space between the upper cover 110 and the filtering portion 120 is increased. A small volume of the filtering space is unbeneficial to circulation of the solid-liquid mixture. That is, a large filtering space is beneficial to circulation of more solid-liquid mixtures, so as to facilitate improving a filtering efficiency. In addition, the channel outlet 132 is located above the filtering portion 120, and thus, a distance between the channel outlet 132 and the filtering portion 120 is increased. That is, the circulation distance of the solid-liquid mixture falling from the channel outlet 132 to the filtering portion 120 is increased. Such a configuration can increase impact force applied to the filtering portion 120 by the solid-liquid mixture flowing out of the channel outlet 132 and falling down to the filtering portion 120 so as to facilitate circulation of liquid, and such a configuration also can improve filtering efficiency by moving the solid substance in the filtering portion 120 that block the filtering holes 121, thereby avoiding a problem of low filtering efficiency caused in a situation that the solid substance blocks the filtering holes 121 and the solid-liquid mixture falls onto the filtering portion 120 with a relatively small impact force. That is, disposing the channel outlet 132 above the filtering portion 120 can further improve the filtering efficiency and improve user satisfaction.

Meanwhile, the solid-liquid mixture in the sewage channel 131 flows out through the channel outlet 132 under the suction effect of gas, and thus, by disposing the channel outlet 132 above the filtering portion 120, a distance between the channel outlet 132 and the bottom of the upper cover 110 is relatively short. With such a configuration, the solid-liquid mixture may impact the bottom of the upper cover 110 after the solid-liquid mixture flows out of the channel outlet 132 of the sewage channel 131 and before the solid-liquid mixture falls, thereby facilitating improving gas-liquid separation efficiency, avoiding a problem of damage to other parts of the cleaning device due to high liquid content in the gas, facilitating reducing a failure rate of the cleaning device, and improving the reliability of the cleaning device. It should be understood that, in a case of a filtering portion 120 of a same size, the channel outlet 132 is disposed above the filtering portion 120, and the channel outlet 132 can be disposed as close to the upper cover 110 as possible. In this way, a position where the filtering portion 120 is disposed in the recycling bin can be heighten and it is ensured that when liquid in the recycling bin is full, the sewage cannot submerge the filtering portion 120, thereby ensuring the reliability of the filtering portion 120 and improving the user satisfaction.

In some embodiments, the filtering portion 120 is detachably connected to the upper cover 110. The solid substance is received on a side of the filtering portion 120 facing the upper cover 110. When the filtering portion 120 receives a large amount of solid substances, the filtering portion 120 can be detached from the upper cover 110 to dump the solid substance, and then the cleaned filtering portion 120 is mounted onto the upper cover 110. Thus, the operation is simple, the use is convenient, and treatment speed of the solid substance is improved. Meanwhile, the detachable connection of the filtering portion 120 to the upper cover 110 facilitates cleaning and maintenance of the filtering portion 120 and improves the user satisfaction.

It should be understood that the above-mentioned filtering portion 120 can achieve solid-liquid separation on the substance to be treated. For example, the solid-liquid mixed substance to be treated flows through the plurality of filtering holes 121 of the filtering portion 120 to achieve solid-liquid separation. Here, the solid substance separated from the solid-liquid mixed substance refers to solid substance with a large size, and the solid substance with a small size will flow to a side of the filtering portion 120 away from the upper cover 110 along with the liquid. That is, solid-liquid separation refers to separation of the large-sized solid substance from the small-sized solid substance and the liquid. Namely, the small-sized solid substance is included in the liquid after separation. Particularly, the large-sized solid substance may be any debris with a diameter or a length greater than or equal to 0.5 mm to 6 mm, for example, any debris with a diameter or a length of 3 mm, while the small-sized solid substance may be any debris with a diameter or a length less than 0.5 mm, such as any debris with a diameter or a length of 0.3 mm. Further, by setting the diameter or the length of the filtering hole 121 reasonably, separation of the solid substance with various large sizes from the small-sized solid substance and the liquid can be achieved. Here, there are a plurality of filtering holes 121, which is beneficial for improving the filtering efficiency of the filtering portion 120.

In this embodiment, as illustrated in FIG. 1, the recycling bin 140 further includes a bin body 130. The bin body 130 includes an inner shell 134 and an outer shell 135 which enclose an accommodation cavity therebetween. The inner shell 134 is provided with the sewage channel 131, and the channel outlet 132 of the sewage channel 131 is in communication with the accommodation cavity. The sewage channel 131 further includes a channel inlet 133 located outside the accommodation cavity. In other words, with the sewage channel 131, the substance to be treated on the surface to be cleaned can be received into the accommodation cavity through the channel inlet 133, the sewage channel 131, and the channel outlet 132.

The outer shell 135 is detachably connected to the upper cover 110, the filtering portion 120 is disposed in the accommodation cavity, and the channel outlet 132 is disposed between the filtering portion 120 and the upper cover 110. Thus, the solid-liquid mixed substance to be treated goes out of the channel outlet 132 of the sewage channel 131 and then is filtered by a plurality of filtering ports, after that, the liquid substance flows to a position between the filtering portion 120 and the bin body 130, and the solid substance is received between the filtering portion 120 and the upper cover 110, thereby achieving solid-liquid separation of the substance to be treated. The upper cover 110 is detachably connected to the bin body 130, and thus, after the upper cover 110 is detached from the bin body 130, the liquid substance in the bin body 130 can be poured out. Since the liquid substance in the bin body 130 is a liquid substance with the solid substance separated, it reduces the possibility that the solid debris is adhered to the inner wall of the bin body 130 and cannot be poured completely, and a problem that the solid debris blocks the drainage pipeline when the solid-liquid mixed substance to be treated is poured out can be avoided, thereby greatly improving the cleaning efficiency. It should be understood that, regarding the treatment of the solid substance, the filtering portion 120 can be detached from the upper cover 110 to dump the solid substance; and thus, it is easy to operate and convenient to clean. Here, a direction indicated by the dashed arrow in FIG. 1 is the circulation direction of the substance to be treated.

In some embodiments, the channel inlet 133 of the sewage channel 131 is disposed at one end of the inner shell 134 of the bin body 130 away from the upper cover 110, and the channel outlet 132 of the sewage channel 131 is disposed at one end of the inner shell 134 of the bin body 130 close to the upper cover 110. The inner shell 134 extends in a direction from the channel inlet 133 to the channel outlet 132, thus forming the sewage channel 131 communicating the channel inlet 133 with the channel outlet 132. The outer shell 135 surrounds the outer side of the inner shell 134, and is connected in a sealed manner to the inner shell 134 at the peripheral side of the channel inlet 133 so as to form the bin body 130 with the accommodation cavity.

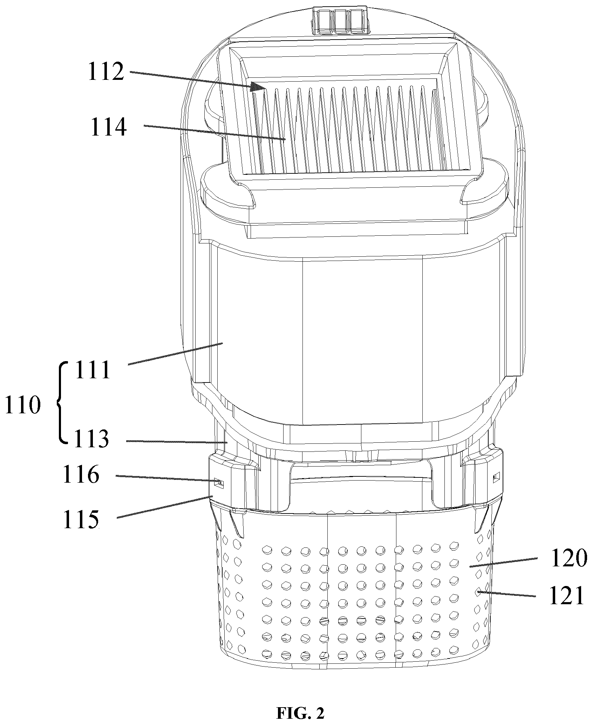

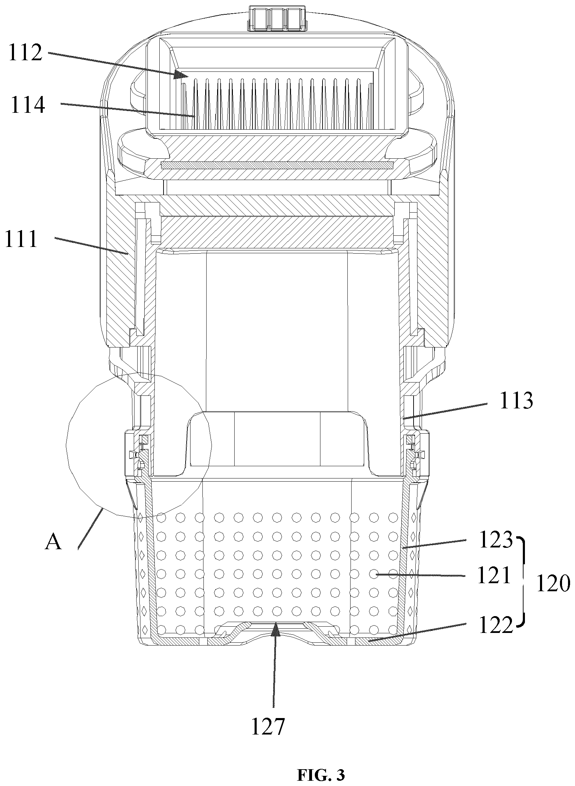

In some embodiments according to the present disclosure, as illustrated in FIGS. 2 and 3, the upper cover 110 includes a cover body 111. The cover body 111 is detachably connected to the outer shell 135. The cover body 111 is provided with a suction port 112 communicated with the accommodation cavity. Under action of fluid, the suction port 112 can be used to pump the substance to be cleaned to the channel outlet 132 through the channel inlet 133 and then flows into the filtering portion 120. It should be understood that the cleaning device further includes a suction fan which is communicated with the suction port 112, and the suction fan is configured to provide suction air flow. Under action of the suction air flow, after the substance to be cleaned on the surface to be cleaned is suctioned to the channel outlet 132 through the channel inlet 133, the substance to be cleaned flows through the plurality of filtering holes 121 of the filtering portion 120 to achieve solid-liquid separation.

In some embodiments, a filtering screen 114 may further be disposed at the suction port 112, and the filtering screen 114 is connected with the cover body 111 to filter the fluid flowing through the suction port 112 so as to, for example, separate solid from the fluid to prevent the solid substance in the recycling bin 140 from being output to outside of the suction port 112 along with the suction air flow, which may cause other parts of the cleaning device to malfunction. The setting of filtering screen 114 is beneficial for receiving the substance to be treated suctioned by the suction air flow in the recycling bin 140 so as to further improve the thoroughness and the effectiveness of receiving the substance to be treated by the recycling bin 140 and improve the cleanliness and the reliability of the cleaning device.

In some embodiments, as illustrated in FIGS. 2 and 3, the upper cover 110 further includes a support 113. The support 113 is disposed on a side of the cover body 111 facing the channel outlet 132 and on a side of the channel outlet 132 close to the outer shell 135. The support 113 is detachably connected to the filtering portion 120. With such a configuration, the channel outlet 132 of the sewage channel 131 is disposed above the filtering portion 120. That is, the filtering portion 120 is sleeved outside the sewage channel 131, and there is a circulation space between the channel outlet 132 and the filtering portion 131, so that after being discharged out of the channel outlet 132 of the sewage channel 131, the substance to be treated can flow through the filtering holes 121 of the filtering portion 120 under the action of gravity to achieve solid-liquid separation. In other words, by setting the positions of the support 113 and the channel outlet 132 of the sewage channel 131 reasonably, the filtering space between the upper cover 110 and the filtering portion 120 is relatively large, thereby ensuring that the filtering portion 120 has an excellent filtering effect and a great filtering efficiency, providing guarantee for subsequent treatment on the liquid substance and the solid substance, and improving the user satisfaction.

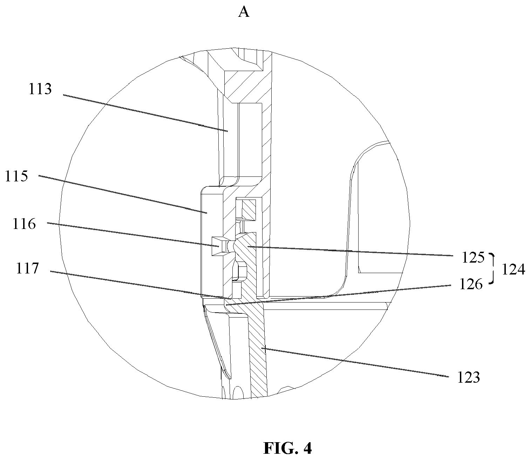

In the above embodiment, as illustrated in FIGS. 3 and 4, one of the upper cover 110 and the filtering portion 120 is provided with a limiting portion, while the other one is provided with a positioning portion configured to match the limiting portion. By contacting or separating the limiting portion and the positioning portion, the filtering portion 120 is mounted on the upper cover 110 and connected to the upper cover 110, or the filtering portion 120 is separated from the upper cover 110 to be detached from the upper cover 110. In other words, the arrangement of the limiting portion and the positioning portion facilitates mounting and detachment of the filtering portion 120, so that various functional requirements on the filtering portion 120 for solid-liquid separation or dumping the solid substance can be met, thereby making it convenient for the user to use.

In some embodiments, one of the limiting portion and the positioning portion is disposed on the support 113 of the upper cover 110 to increase the volume of the filtering space. For example, the limiting portion is disposed on the support 113 and the positioning portion is disposed on the filtering portion 120, or the limiting portion is disposed on the filtering portion 120 and the positioning portion is disposed on the support 113. Different setting positions of the limiting portion and the positioning portion can meet requirements for different structures of the limiting portion and the positioning portion, thereby extending application range of the product.

In this embodiment, on the one hand, the limiting portion includes a magnetic member, and the positioning portion includes a magnetically-attracted member. When the filtering portion 120 is required to be mounted on the support 113 of the upper cover 110, the filtering portion 120 is moved in a direction toward the support 113. Due to mutual attraction between the magnetic member and the magnetically-attracted member, the filtering portion 120 is fixed to the support 113, thereby enabling the filtering portion 120 to be mounted on the support 113. When the filtering portion 120 needs to be separated from the support 113 of the upper cover 110 for cleaning, maintenance, and dumping of solid substance, the filtering portion 120 is moved in a direction away from the support 113, and the magnetic member and the magnetically-attracted member overcome the magnetic attraction force to separate, thus achieving the detachment of the filtering portion 120 from the support 113. The arrangement of the magnetic member and the magnetically-attracted member facilitates mounting and detachment of the filtering portion 120, and the operation is simple. In addition, it is convenient for the magnetic member and the magnetically-attracted member to be mounted, and thus, it is beneficial to production. Specifically, the magnetic member may be a magnet, magnetic steel, or other magnetic members that meet the requirements, the magnetically-attracted member may be a member made of metal or other material that meets the requirements. For example, the magnetically-attracted member is a sheet made of metal.

On the other hand, the limiting portion includes a clamp, and the positioning portion includes a slot. When the filtering portion 120 is required to be mounted on the support 113 of the upper cover 110, the filtering portion 120 is moved in a direction toward the support 113, and by engaging the clamp with the slot, the filtering portion 120 can be fixed to the support 113 so as to enable the filtering portion 120 to be mounted on the support 113. When the filtering portion 120 needs to be separated from the support 113 of the upper cover 110 for cleaning, maintenance, and dumping of solid substance, the clamp is separated from the slot, and the filtering portion 120 is moved in a direction away from the support 113, thus achieving the detachment of the filtering portion 120 from the support 113. The arrangement of the clamp and the slot facilitates mounting and detachment of the filtering portion 120, and the operation is simple. In addition, the clamp and the slot are convenient to manufactured, and the cost is relatively low.

On the other hand, the limiting portion includes a magnetic member and a clamp 125, and the positioning portion includes a magnetically-attracted member and a slot 116. When the filtering portion 120 is required to be mounted on the support 113 of the upper cover 110, the filtering portion 120 is moved in a direction toward to the support 1 13 to enable the clamp 125 and the slot 116 to be engaged with each other and meanwhile, to enable the magnetic member and the magnetically-attracted member to be attracted with each other. That is, the filtering portion 120 is fixed to the support 113 through double connection, and thus connection reliability of the filtering portion 120 and the support 113 is greatly improved, and the possibility that the filtering portion 120 is separated from the support 113 and falls out of the support 113 during traveling of the cleaning device is reduced, thereby improving the reliability of the cleaning device. When the filtering portion 120 needs to be separated from the support 113 of the upper cover 110 for cleaning, maintenance, and dumping of solid substance, the clamp 125 is separated from the slot 116, and then the filtering portion 120 is moved in the direction away from the support 113. When the magnetic member and the magnetically-attracted member overcome the magnetic attraction force and separate, the filtering portion 120 can be detached from the support 113 and the operation is simple.

It should be understood that the limiting portion and the positioning portion may instead have any other structure that meets the requirements, as long as connection and detachment of the filtering portion 120 and the support 113 can be achieved, and the structure will not be enumerated herein.

In some embodiments according to the present disclosure, the filtering portion 120 includes a bottom plate 122 and a side plate 123. The bottom plate 122 is provided with a mounting hole 127. The sewage channel 131 passes through the mounting hole 127. The side plate 123 is connected with the bottom plate 122, i.e., the side plate 123 and the bottom plate 122 are connected and form the filtering space together with the sewage channel 131, the support 113 and the cover body 111 in a surrounding manner. Here, one of the limiting portion and the positioning portion is disposed on the side plate 123 for detachable connection with the support 113 of the upper cover 110. The channel outlet 132 is disposed in the filtering space formed by the bottom plate 122, the side plate 123, and the upper cover 110, and is located above the side plate 123, which can increase the falling distance for the substance to be treated flowing out through the channel outlet 132 to the bottom plate 122, thereby increasing an impact force applied to the bottom plate 122 when the solid-liquid mixture flowing out through the channel outlet 132 falls to the bottom plate 122. The larger impact force is beneficial for improving the circulation speed of the liquid, and can remove solid substance blocking the filtering holes 121, so that thoroughness of the liquid flowing through the filtering portion 120 is further improved. In other words, the large filtering space is beneficial to the circulation of the substance, and the channel outlet is located above the side plate 123, so that most or all of the substance to be treated flowing out through the channel outlet 132 can flow through the filtering portion 120, thereby ensuring that the filtering portion 120 has an excellent solid-liquid separation effect, facilitating improving the filtering efficiency and ensuring the excellent filtering effect, and improving the user satisfaction.

The filtering holes 121 are at least provided on the bottom plate 122, i.e., the filtering holes 121 may be provided on the bottom plate 122, or the filtering holes 121 are provided on both the bottom plate 122 and the side plate 123. By providing the filtering holes 121, the solid substance can be isolated in the filtering space, and the liquid substance flows out of the filtering space so as to achieve solid-liquid separation. Here, different positions of the filtering holes 121 can meet the requirements for different filter efficiencies. For example, providing the filtering holes 121 in both the bottom plate 122 and the side plate 123 is beneficial for improving the flow rate of the liquid substance, thereby improving the filtering efficiency and facilitating to improve the cleaning efficiency of the cleaning device. It should be understood that there are a plurality of filtering holes 121, and shapes and sizes of the plurality of filtering holes 121 may be same or different, which is not specifically limited in the present disclosure.

In the above embodiment, as illustrated in FIGS. 3 and 4, the side plate 123 protrudes in a direction away from the bottom plate 122 to provide a connecting portion 124 on the protruding part, i.e., the connecting portion 124 is disposed protruding out of the side plate 123 in the direction away from the bottom plate 123. The support 113 protrudes in a direction toward the bottom plate 122 to provide a mounting portion 115 on the protruding part, where the mounting portion is configured to mount the connecting portion 124. That is, the mounting portion protrudes from the support 113 in a direction toward the bottom plate 122. Since the connecting portion 124 includes a clamp 125, when the limiting portion is a clamp 125 disposed on the filtering portion, a detachable connection between the filtering portion 120 and the upper cover 122 is achieved through the engagement of the clamp 125 and the mounting portion 115. And further, the connecting portion 124 and the mounting portion 125, which protrude out, facilitate to increase a volume of the filtering space, thereby improving the filtering efficiency and the filtering effect of the filtering portion 120, and improving the user satisfaction.

In some embodiments according to the present disclosure, when the cleaning device works, the channel inlet 133 of the sewage channel 131 is located below the channel outlet 132. The bottom plate 122 of the filtering portion 120 is located below the channel outlet 132. That is, the connecting portion 124 is disposed protruding upward from the side plate 123, and the mounting portion 115 is disposed protruding downward from the support 113, so that the distance between the bottom plate 122 and the cover body 111 is increased in the vertical direction, i.e., the size of the filtering space in the vertical direction is increased, thereby increasing the volume of the filtering space.

In some embodiments according to the present disclosure, the mounting portion 115 includes a mounting groove, and the upper cover 110 is provided with a slot 116 penetrating through the bottom of the mounting groove. In this way, mounting and detachment of the filtering portion 120 and the upper cover 110 can be quickly achieved through the engagement of the slot 116 and the clamp 125. In addition, in the process of mounting and detaching the filtering portion 120, through the bottom of the mounting slot, an operator can determine visually and intuitively whether the clamp 125 is engaged by the slot 116, or whether the clamp 125 is released by the slot 116, i.e., the operator can determine intuitively whether the filtering portion 120 is mounted in place or whether the filtering portion 120 is detached from the upper cover 110, thereby facilitating improving the mounting efficiency and the detachment efficiency of the filtering portion 120 and improving the user satisfaction.

In some embodiments according to the present disclosure, the clamp 125 is an elastic member, which facilitates the contact and engagement of the clamp 125 with the slot 116 or the separation of the clamp 125 from the slot 116 by utilizing the elastic force of the elastic member. When the clamp 125 is in contact and engaged with the slot 116, the elastic force of the elastic member can ensure that the filtering portion 120 is mounted on the support 113 of the upper cover 110 reliably and firmly, thereby improving the connection reliability of the filtering portion 120 and the support 113 of the upper cover 110.

In some embodiments according to the present disclosure, the mounting portion 115 further includes a bottom wall 117 close to the bottom plate 122. The connecting portion 124 further includes an abutting portion 126 located on a side of the clamp 125 close to the bottom plate 122, and the abutting portion 126 is adapted to be in contact with the bottom wall 117 to make the clamp 125 positioned in the slot 116. That is, in the process of mounting the filtering portion 120 on the support 113 of the upper cover 110, the abutting portion 126 of the connecting portion 124 abuts against the bottom wall 117 of the mounting portion 115, thereby achieving the pre-positioning of the clamp 125 with respect to the slot 116, an then the clamp 125 is in contact and engaged with the slot 116 to complete connection of the filtering portion 120 and the support 113 of the upper cover 110, thereby further improving the assembling efficiency.

In some embodiments according to the present disclosure, the recycling bin 140 further includes a liquid level detection device, which is disposed on the bin body 130 and configured to detect a level of the liquid in the accommodation cavity. It should be understood that the liquid level detection device is connected to a controller of the cleaning device, so that when a detection result of the liquid level detection device reaches a preset height, i.e., when the level of the liquid substance in the bin body 130 reaches the preset height, the controller controls the suction fan to stop working so as to avoid the suction fan from continuing to work to cause the liquid level in the bin body 1 30 to exceed the preset height and overflow or cause faults of other parts of the cleaning device, thereby improving the cleanliness and reliability of the cleaning device and improving the user satisfaction.

In some embodiments according to the present disclosure, the cleaning device further includes a fluid supplier and a cleaning portion. The fluid supplier is configured to supply cleaning fluid to the surface to be cleaned and for example, supplying a cleaning solution to the surface to be cleaned. Then, the cleaning portion can clean the surface to be cleaned, and next, the suction fan works, and under action of the suction air flow, the solid-liquid mixed substance to be treated on the surface to be cleaned can be suctioned through the channel inlet 133 and the channel outlet 132 of the sewage channel 131, and then flow through a filter. The solid substance is accommodated to a side of the filter facing toward the upper cover 110, and the liquid substance flows into the bin body 130 under the action of the gravity so as to achieve solid-liquid separation.

The present disclosure has been described by the above-mentioned embodiments, but it should be understood that the above-mentioned embodiments are only for the purpose of illustration and description, and are not intended to limit the present disclosure to the scope of the described embodiments. In addition, it should be noted by one of those skilled in the art that the present disclosure is not limited to the above-mentioned embodiments, a variety of variations and modifications may be made according to the teaching of the present disclosure, and all these variations and modifications fall within the protection scope of the present disclosure. The protection scope of the present disclosure is defined by the appended claims and their equivalent.

## Claims

1. A recycling bin, comprising:
an upper cover;
a filtering portion, detachably connected to the upper cover and provided with a plurality of filtering holes, wherein a filtering space is formed between the filtering portion and the upper cover; and
a sewage channel, passing through the filtering portion and comprising a channel outlet disposed within the filtering space, wherein the channel outlet is located above the filtering portion.

2. The recycling bin according to claim 1, further comprising:
a bin body, comprising an outer shell and an inner shell enclosed to form an accommodation cavity, wherein the outer shell is detachably connected to the upper cover, the inner shell is provided with the sewage channel, and the filtering portion is within the accommodation cavity;
wherein the channel outlet is communicated with the accommodation cavity, and the sewage channel further comprises a channel inlet outside the accommodation cavity.

3. The recycling bin according to claim 2, wherein the upper cover comprises:
a cover body detachably connected to the outer shell, wherein the cover body is provided with a suction port, the suction port is communicated with the accommodation cavity, the suction port enables a substance to be cleaned to be suctioned under an action of a fluid through the channel inlet to the channel outlet and then to flow through the filtering portion.

4. The recycling bin according to claim 3, wherein the upper cover further comprises:
a support, provided on a side of the cover body toward the channel outlet and located on a side of the channel outlet close to the outer shell, wherein the support is detachably connected to the filtering portion.

5. The recycling bin according to claim 1, wherein
one of the upper cover and the filtering portion is provided with a limiting portion, and the other one of the upper cover and the filtering portion is provided with a positioning portion configured to fit the limiting portion, and contact or separation between the limiting portion and the positioning portion is configured to connect the filtering portion and the upper cover or to separate the filtering portion from the upper cover.

6. The recycling bin according to claim 5, wherein
the limiting portion comprises a magnetic member, and the positioning portion comprises a magnetically-attracted member; and/or
the limiting portion comprises a clamp, and the positioning portion comprises a slot.

7. The recycling bin according to claim 1, wherein the filtering portion comprises:
a bottom plate provided with a mounting hole, wherein the sewage channel passes through the mounting hole; and
a side plate connected to the bottom plate;
wherein the channel outlet is located above the side plate, and the filtering holes are at least provided on the bottom plate.

8. The recycling bin according to claim 7, wherein
the side plate protrudes in a direction away from the bottom plate to provide a connecting portion, and the connecting portion comprises a clamp; and
the upper cover protrudes in a direction toward the bottom plate to provide a mounting portion configured to mount the connecting portion.

9. The recycling bin according to claim 8, wherein
the mounting portion comprises a mounting groove, and the upper cover is provided with a slot passing through a bottom of the mounting groove;
the mounting portion further comprises a bottom wall close to the bottom plate; and
the connecting portion further comprises an abutting portion located on a side of the clamp close to the bottom plate, wherein the abutting portion is configured to contact the bottom wall so as to position the clamp in the slot.

10. The recycling bin according to claim 7, wherein the filtering holes are further provided on the side plate.

11. The recycling bin according to claim 7, wherein one of the limiting portion and the positioning portion is provided on the side plate, and is detachably connected with the support of the upper cover.

12. The recycling bin according to claim 2, further comprising a liquid level detection device provided on the bin body and configured to detect a liquid level in the accommodation cavity.

13. The recycling bin according to claim 12, wherein when a detection result from the liquid level detection device is that a level of a liquid substance in the bin body reaches a preset height, a controller of a cleaning device controls a suction fan to stop working.

14. A cleaning device, comprising:
a device body, and
the recycling bin according to any one of claims 1 to 13, wherein the recycling bin is detachably connected to the device body.
